# EUROPÄISCHE PATENTSCHRIFT

(11) **EP 3 123 022 B1**
(45) Veröffentlichungstag und Bekanntmachung des Hinweises auf die Patenterteilung: **20.02.2019**
(21) Anmeldenummer: 15714414.8
(22) Anmeldetag: 25.03.2015
(51) Int. Cl.: F02M 43/00, F02M 21/02, F02D 19/06, F02M 63/02

(54) **MENGENBEGRENZUNGSVENTIL, INSBESONDERE FÜR EIN DUAL-FUEL-KRAFTSTOFFEINSPRITZSYSTEM**
FLOW LIMITING VALVE, IN PARTICULAR FOR A DUAL FUEL INJECTION SYSTEM
VALVE DE LIMITATION DE DÉBIT NOTAMMENT DESTINÉE À UN SYSTÈME D'INJECTION DE CARBURANT EN BICARBURANT

(30) Priorität: 16.04.2014 DE 102014105439
(43) Veröffentlichungstag der Anmeldung: 01.02.2017
(73) Patentinhaber: Woodward L'Orange GmbH, 70435 Stuttgart (DE)
(72) Erfinder: KALENBORN, Markus, 89160 Dornstadt (DE)
(74) Vertreter: Conroy, John
(86) Internationale Anmeldenummer: PCT/EP2015/000638
(87) Internationale Veröffentlichungsnummer: WO 2015/158413

(56) Entgegenhaltungen:
- EP-A2- 0 133 777
- EP-A2- 0 964 153
- DE-A1- 19 548 610
- DE-A1-102005 036 780
- DE-A1-102008 014 250

## Beschreibung

Die Erfindung bezieht sich auf ein Mengenbegrenzungsventil für ein Dual-Fuel-Kraftstoffeinspritzsystem, nach dem Oberbegriff des Anspruches 1.

In der EP 2 423 498 A1 wird ein Mengenbegrenzungsventil für einen Großdieselmotor beschrieben, das in einer Ventilkammer einen axial verstellbaren Ventilkörper aufweist, welcher von einem Federelement gegen einen eingangsseitigen Ventilsitz vorgespannt ist. Mit dem Beginn eines Kraftstoff-Einspritzvorgangs reduziert sich der ausgangsseitige Druck am Mengenbegrenzungsventil, wodurch der Ventilkörper aus dem Ventilsitz herausgehoben wird und Kraftstoff das Mengenbegrenzungsventil passieren kann. So bald der Einspritzvorgang beendet ist, wird ausgangsseitig wieder Druck aufgebaut, wodurch der Ventilkörper wieder in die Schließposition verstellt wird.

Aus der DE 10 2005 036 780 A1 ist eine Mengenbegrenzungsanordnung bekannt, die ein Mengenbegrenzungsventil und ein hierzu parallel geschaltetes Bypassventil aufweist. Das Bypassventil kann mithilfe einer Stelleinrichtung in seine Offenstellung verstellt werden, wobei die Stelleinrichtung in Form eines Magnetstellers ausgebildet ist. Die Stelleinrichtung ist hinsichtlich der über sie aufzubringenden Stellkraft so ausgelegt, dass ein Überführen in die Offenstellung bei Differenzdrücken zwischen der Anström- und der Abströmseite der Mengenbegrenzungsanordnung möglich ist, wie sie bei störungsfreiem Betrieb des Einspritzinjektors auftreten, nicht aber bei darüber liegenden Differenzdrücken.

Bei einer Einspritzung strömt eine bestimmte Kraftstoffmenge ab, wodurch sich eine Druckdifferenz zwischen Anström- und Abströmseite der Mengenbegrenzungsanordnung einstellt, welche einen Ventilkolben in Richtung auf seine auslaufseitige Sperrlage verstellt. Diese Position behält der Ventilkolben bei, bis das Bypassventil öffnet, woraufhin Kraftstoff über das Bypassventil von der Anström- zur Abströmseite überströmen kann und die

### Ergänzungsseite 1a

Druckdifferenz verringert wird. In der Folge kann der Ventilkolben wieder in seine Ausgangslage zurückkehren.

Die DE 195 48 610 A1 offenbart ein Durchflussbegrenzungsventil mit einem Ventilglied, in das eine Drosselstelle eingebracht ist, wobei im Falle eines zu hohen Differenzdrucks diesseits und jenseits der Drosselstelle das Ventilglied gegen einen Ventilsitz im Gehäuse verstellt und das Ventil hierdurch verschlossen wird. Zusätzlich weist das Durchflussbegrenzungsventil eine Wicklung an der Außenseite des Gehäuses auf, die bei Bestromung eine Magnetkraft auf das Ventilglied ausübt, wobei die Magnetkraft das Ventilglied in Richtung der Öffnungsstellung beaufschlagt.

Der Erfindung liegt die Aufgabe zu Grunde, mit einfachen konstruktiven Maßnahmen ein kompakt bauendes Mengenbegrenzungsventil mit variabler Einstellmöglichkeit zu schaffen.

Diese Aufgabe wird erfindungsgemäß mit den Merkmalen des Anspruches 1 gelöst. Die Unteransprüche geben zweckmäßige Weiterbildungen an.

Das erfindungsgemäße Mengenbegrenzungsventil wird zur Steuerung des Flusses eines Förderfluids eingesetzt, das durch das Mengenbegrenzungsventil hindurchgeleitet wird. Bei dem Förderfluid handelt es sich beispielsweise um ein gasförmiges Medium, wobei im Prinzip auch flüssige Medien in Betracht kommen. Es ist insbesondere möglich, das Mengenbegrenzungsventil für ein Kraftstoffeinspritzsystem einer Brennkraftmaschine einzusetzen, vorzugsweise für ein Dual-Fuel-Kraftstoffeinspritzsystem, bei dem die Brennkraftmaschine sowohl mit Brenngas, insbesondere im Zündstrahlverfahren, als auch mit Flüssigkraftstoff zu betreiben ist, insbesondere mit Diesel-Kraftstoff, Biokraftstoff oder Schweröl. In einem derartigen Dual-Fuel-Kraftstoffeinspritzsystem ist das Mengenbegrenzungsventil vorzugsweise einer Brenngas-Injektoreinheit zugeordnet. Es ist aber auch möglich, das Mengenbegrenzungsventil zusätzlich oder alternativ einer Flüssigkraftstoff-Injektoreinheit zuzuordnen.

Das Mengenbegrenzungsventil weist einen zwischen einer Schließ- und einer Öffnungsposition verstellbaren Ventilkörper auf, wobei in der Öffnungsposition ein Strömungskanal für das Förderfluid freigegeben und in Schließposition der Strömungskanal versperrt ist. Die Stellbewegung des Ventilkörpers wird von dem Druck des Förderfluids gesteuert.

In das Gehäuse des Mengenbegrenzungsventils ist zusätzlich ein Steuerventil integriert, um unabhängig vom Druck des Förderfluids den Ventilkörper zwischen Öffnungs- und Schließposition verstellen zu können. Dies ermöglicht es, das Mengenbegrenzungsventil auch in solchen Situationen zu schließen und damit den Durchfluss des Förderfluids zu unterbrechen, in denen der Förderfluiddruck einen Wert einnimmt, bei dem der Ventilkörper in der Öffnungsposition steht. Das Steuerventil beaufschlagt den in Öffnungsposition stehenden Ventilkörper und verstellt diesen in die Schließposition. Somit erlaubt das Steuerventil ein Schließen des Mengenbegrenzungsventils in zusätzlichen Situationen unabhängig von dem Druck des Förderfluids. Es ist insbesondere möglich, das Mengenbegrenzungsventil über das Steuerventil zu schließen, wenn der Ventilkörper aufgrund des aktuellen Drucks des Förderfluids in Öffnungsposition steht.

Das Steuerventil ist in das Gehäuse des Mengenbegrenzungsventils integriert, so dass kein zusätzlicher Raumbedarf für das Steuerventil entsteht und insgesamt ein kompakt bauendes Mengenbegrenzungsventil gegeben ist. Das Mengenbegrenzungsventil kann gegebenenfalls in die Injektoreinheit integriert sein.

Gemäß einer vorteilhaften Ausführung ist das Steuerventil passiv ohne eigene Energieversorgung ausgebildet, so dass kein elektrischer, pneumatischer oder hydraulischer Aktor im Steuerventil für die Durchführung der Stellbewegung erforderlich ist. Gemäß einer alternativen Ausführung kann es aber auch zweckmäßig sein, das Steuerventil aktiv auszubilden und mit einem derartigen, elektrischen, pneumatischen oder hydraulischen Aktor zu versehen, beispielsweise einem elektromagnetischen Stellglied, bei dessen Betätigung der Ventilkörper verstellt wird. Der Aktor des aktiv ausgeführten Steuerventils ist vorzugsweise über Stellsignale zu schalten, die aus einer Sensorik im Kraftstoffeinspritzsystem stammen, beispielsweise einem Drucksensor.

Gemäß einer zweckmäßigen Ausführung wird ein Stellelement des Steuerventils, das das Ventilglied des Steuerventils bildet und den Ventilkörper des Mengenbegrenzungsventils beaufschlagt, über ein Steuerfluid verstellt. Insbesondere bei einem Einsatz des Mengenbegrenzungsventils in einem Kraftstoffeinspritzsystem kann als Steuerfluid der Flüssigkraftstoff verwendet werden, der im Kraftstoffeinspritzsystem unter Druck steht und einer Injektoreinheit zugeführt wird. Es ist beispielsweise möglich, über eine Steuerleitung einen Teil des unter Druck stehenden Flüssigkraftstoffes abzuzweigen und dem Steuerventil für die Ansteuerung des Stellelementes zuzuführen. Diese Ausführung hat den Vorteil, dass das Stellelement passiv ausgeführt ist und eine aktive Ansteuerung des Stellelementes mit eigener Energieversorgung nicht notwendig ist. Die Ansteuerung erfolgt vielmehr über den Flüssigkraftstoff, wobei Druckänderungen im zugeführten Flüssigkraftstoff zu einer Stellbewegung des Stellelementes des Steuerventils führen.

Gemäß einer bevorzugten Ausführung wird das Mengenbegrenzungsventil in einem Dual-Fuel-Kraftstoffeinspritzsystem eingesetzt, das eine Brenngas-Injektoreinheit und eine Flüssigkraftstoff-Injektoreinheit umfasst. Das Mengenbegrenzungsventil ist bevorzugt der Brenngas-Injektoreinheit zugeordnet, es kann im Prinzip aber auch der Flüssigkraftstoff-Injektoreinheit zugeordnet sein. Das Mengenbegrenzungsventil befindet sich im Strömungsweg zur Injektoreinheit und ist in der Lage, die Strömungszufuhr des Fluids zur Injektoreinheit zu unterbrechen. Hierbei erfolgt eine Sperrung des Mengenbegrenzungsventils zum einen in Abhängigkeit des Förderfluiddrucks, indem der Ventilkörper des Mengenbegrenzungsventils von der Öffnungs- in die Schließposition verstellt wird, wenn der Mitteldruck während eines Einspritzvorgangs unter einen Druckschwellenwert sinkt. Zum andern kann auch bei einer Fehlfunktion im Einspritzsystem, wenn der Ventilkörper beispielsweise nicht selbsttätig in die Schließposition verstellt wird, über die Ansteuerung des integrierten Steuerventils der Ventilkörper in die Schließposition versetzt werden. Dies erfolgt durch eine Druckänderung des Steuerfluids, bei dem es sich im Dual-Fuel-Kraftstoffeinspritzsystem um den Flüssigkraftstoff handelt. Bei einer entsprechend hohen Druckänderung des Steuerfluids wird das Stellelement des Steuerventils von der Außerfunktions- in die Funktionsposition verstellt, in der das Stellelement den Ventilkörper in die Schließposition versetzt.

Vorteilhafterweise ist der Ventilkörper des Mengenbegrenzungsventils von einem Federelement in seine Öffnungsposition kraftbeaufschlagt. Das Stellelement des Steuerventils ist, gemäß weiterer vorteilhafter Ausführung, von einem Federelement in seine Außerfunktionsposition kraftbeaufschlagt, in der der Ventilkörper vom Stellelement unbeeinflusst ist. Durch Ansteuerung des Stellelements, beispielsweise über das Steuerfluid, wird das Stellelement gegen die Kraft des auf ihn wirkenden Federelementes von der Außerfunktions- in die Funktionsposition verstellt und kann den Ventilkörper gegen die Kraft des auf ihn wirkenden Federelementes von der Öffnungs- in die Schließposition versetzen.

Das Stellelement des Steuerventils wird durch die Kraft des Federelementes wieder in die Außerfunktionsposition verstellt, sobald sich die Druckverhältnisse im Steuerfluid wieder entsprechend einstellen. Dies ist bei einem Dual-Fuel-Kraftstoffeinspritzsystem bei ordnungsgemäßer Funktion der Fall.

Gemäß einer weiteren zweckmäßigen Ausführung ist in eine Steuerleitung des Steuerfluids eine Drossel integriert, an der ein Druckabfall im Steuerfluid erfolgt, der für die Ansteuerung des Steuerventils herangezogen werden kann. Es wird beispielsweise der höhere Druck stromauf der Drossel dem Stellelement zugeführt, so dass der erhöhte Druck das Stellelement in die Außerfunktionsposition versetzt und in dieser hält. Fällt der Druck in der Steuerleitung ab, bewegt sich das Stellelement durch die Federkraftwirkung in seine Funktionsposition und versetzt den Ventilkörper in die Schließposition.

Die Verstellung des Stellelements des Steuerventils erfolgt mit dem Überschreiten eines Mindestdrucks. In eine Steuerleitung, welche bei einem Dual-Fuel-Kraftstoffeinspritzsystem mit der Flüssigkraftstoff-Injektoreinheit verbunden ist, kann ein verstellbares Pilotventil angeordnet sein, wobei stromab des Pilotventils die Steuerleitung in ein Kraftstoffreservoir mündet und der Druck des Steuerfluids für die Stellbewegung des Steuerventils abgegriffen wird. Zweckmäßigerweise befindet sich die Drossel stromab des Pilotventils, wobei der Druck unmittelbar stromauf der Drossel für die Ansteuerung des Steuerventils abgegriffen wird. Das Pilotventil, beispielsweise ein 2/2-Wegeventil, schaltet im Takt der Einspritzung in der Flüssigkraftstoff-Injektoreinheit, wobei bei geschlossenem Pilotventil der Druck stromab des Pilotventils abgebaut und bei geöffnetem Pilotventil aufgebaut wird. Hierbei stellt sich ein Mitteldruck ein, der über dem Mindestdruck liegt, welcher erforderlich ist, um das Steuerventil in der Außerfunktionsposition zu halten. Der Mindestdruck wird dagegen nicht mehr erreicht, wenn das Pilotventil im Falle einer Fehlfunktion geschlossen bleibt, woraufhin das Steuerventil in die Funktionsposition zum Schließen des Ventilkörpers verstellt wird.

Gemäß einer weiteren zweckmäßigen Ausführung ist das Stellelement des Steuerventils als ein Stellkolben ausgeführt, der in einem Kolbenaufnahmeraum in dem Mengenbegrenzungsventil verstellbar ist. Zumindest eine Seite des Stellkolbens bzw. eines mit dem Stellkolben verbundenen Bauteils wird von dem Steuerfluid beaufschlagt, um den Stellkolben gegen die Kraft des Federelementes in der Außerfunktionsposition zu halten. Gemäß einer weiteren zweckmäßigen Ausführung sind beide gegenüberliegenden Stirnseiten des Stellkolbens bzw. des mit dem Stellkolben verbundenen Bauteils von dem Steuerfluid beaufschlagt, jedoch mit unterschiedlich hohem Druck, insbesondere mit dem Druck stromauf und stromab der Drossel in der Steuerleitung. Diese Ausführung hat den Vorteil, dass die bei einer Stellkolbenbewegung auftretende Volumenverdrängung in dem Kolbenaufnahmeraum über die Verbindung mit der Steuerleitung abgeführt werden kann. Außerdem werden etwaige Fehlströme unmittelbar zwischen den beiden Kammern des Kolbenaufnahmeraums auf gegenüberliegenden Seiten des Stellkolbens bzw. des mit dem Stellkolben verbundenen Bauteils ohne Funktionsbeeinträchtigung abgeleitet.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung ein Dual-Fuel-Kraftstoffeinspritzsystem für eine Brennkraftmaschine, mit einer Flüssigkraftstoff-Injektoreinheit und einer Brenngas-Injektoreinheit, der ein Mengenbegrenzungsventil zugeordnet ist,
- Fig. 2: das der Brenngas-Injektoreinheit zugeordnete Mengenbegrenzungsventil im Längsschnitt.

In den Figuren sind gleiche Bauteile mit gleichen Bezugszeichen versehen.

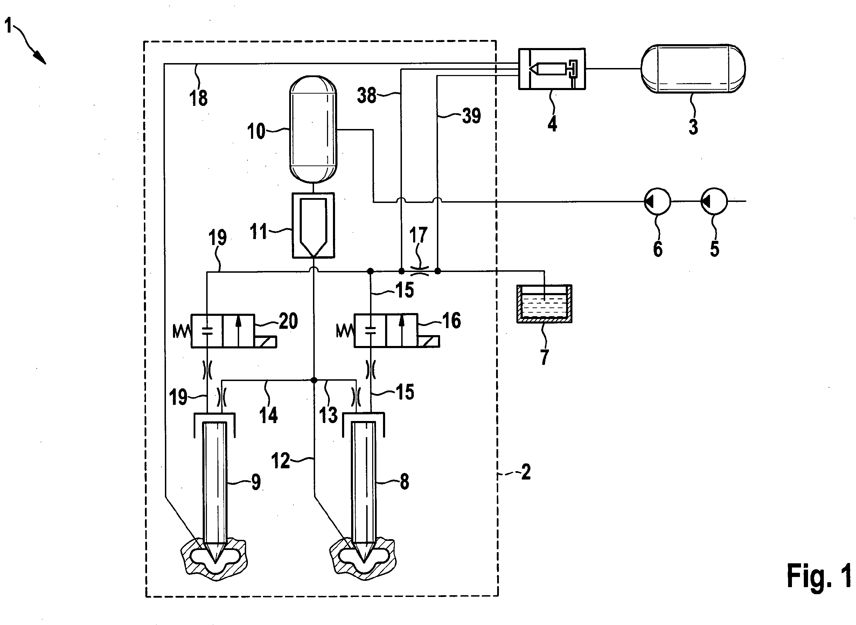

Das in **Fig. 1** gezeigte Dual-Fuel-Kraftstoffeinspritzsystem 1 ist für den Betrieb sowohl mit Flüssigkraftstoff, beispielsweise Dieselkraftstoff oder Schweröl oder Bioöl, als auch für den Betrieb mit Brenngas, z.B. Erdgas oder Biogas im Zündstrahlverfahren eingerichtet. Das Dual-Fuel-Kraftstoffeinspritzsystem 1 umfasst ein Dual-Fuel-Injektorsystem 2 sowie einen Hochdruck-Gasspeicher 3 zur Aufnahme des unter Druck stehenden Brenngases, ein Brenngas-Mengenbegrenzungsventil 4, welches von dem Hochdruck-Gasspeicher 3 gespeist wird, und im Kraftstoffteil zwei hintereinandergeschaltete Pumpen 5 und 6 sowie ein Flüssigkraftstoff-Reservoir 7. Das Dual-Fuel-Injektorsystem 2 umfasst eine Flüssigkraftstoff-Injektoreinheit 8 sowie eine Brenngas-Injektoreinheit 9, über die Flüssigkraftstoff bzw. Brenngas in die Brennkammer einer Brennkraftmaschine einspritzbar ist.

Des Weiteren gehört zum Dual-Fuel-Injektorsystem 2 ein Hochdruckspeicher 10 für den Flüssigkraftstoff, der über die beiden in Reihe geschalteten Pumpen 5 und 6 - eine Niederdruckpumpe und eine Hochdruckpumpe - mit unter Hochdruck stehendem Flüssigkraftstoff versorgt wird. Der Hochdruckspeicher 10 ist entweder in der Injektoreinheit angeordnet oder als Common-Rail-Hochdruckspeicher außerhalb der Injektoreinheit ausgebildet. Dem Hochdruckspeicher 10 ist ein Flüssigkraftstoff-Mengenbegrenzungsventil 11 nachgeschaltet, das in einer Hochdruckleitung 12 angeordnet ist, welche zur Flüssigkraftstoff-Injektoreinheit 8 führt. Von dieser Hochdruckleitung 12 verzweigen Zufluss-Steuerleitungen 13 und 14 mit jeweils einer Drossel zur Ansteuerung der Flüssigkraftstoff-Injektoreinheit 8 bzw. der Brenngas-Injektoreinheit 9. Der durch die Zufluss-Steuerleitungen 13, 14 geführte Kraftstoff stellt das Steuerfluid zur Ansteuerung der Injektoreinheiten 8, 9 dar.

Das der Flüssigkraftstoff-Injektoreinheit 8 zugeleitete Steuerfluid strömt über eine Rückfluss-Steuerleitung 15, in der sich ein Pilotventil 16 befindet, zu dem Flüssigkraftstoff-Reservoir 7. Das Pilotventil 16 ist beispielsweise als 2/2-Wegeventil ausgeführt. In dem Steuerleitungsabschnitt zwischen dem Pilotventil 16 und dem Kraftstoff-Reservoir 7 befindet sich eine Drossel 17, ebenso in den Zufluss-Steuerleitungen 13 und 14 zu den Injektoreinheiten 8, 9 und in der Rückfluss-Steuerleitung 15 stromauf des Pilotventils 16.

Gasseitig strömt von dem Hochdruck-Gasspeicher 3 das Brenngas zu dem Brenngas-Mengenbegrenzungsventil 4 und weiter über eine Leitung 18 zur Brenngas-Injektoreinheit 9. Die Ansteuerung der Injektoreinheit 9 erfolgt über den Flüssigkraftstoff, welcher über die Zufluss-Steuerleitung 14 zugeführt wird. Abflussseitig wird das Steuerfluid aus der Zufluss-Steuerleitung 14 über eine Rückfluss-Steuerleitung 19 abgeführt, in die eine Drossel und nachgeschaltet ein Steuer- bzw. Pilotventil 20 integriert ist. Stromab des Ventils 20 mündet die Rückfluss-Steuerleitung 19 in die Rückfluss-Steuerleitung 15 der Flüssigkraftstoff-Injektoreinheit 8 stromauf der Drossel 17.

Während des Startvorgangs der Brennkraftmaschine arbeitet das Dual-Fuel-Kraftstoffeinspritzsystem 1 bevorzugt ausschließlich mit Kraftstoffeinspritzung über die Flüssigkraftstoff-Injektoreinheit 8. Bei höheren Drehzahlen kann auf Gasbetrieb im Zündstrahlverfahren umgeschaltet werden, wobei über die Flüssigkraftstoff-Injektoreinheit 8 eine Piloteinspritzung erfolgt.

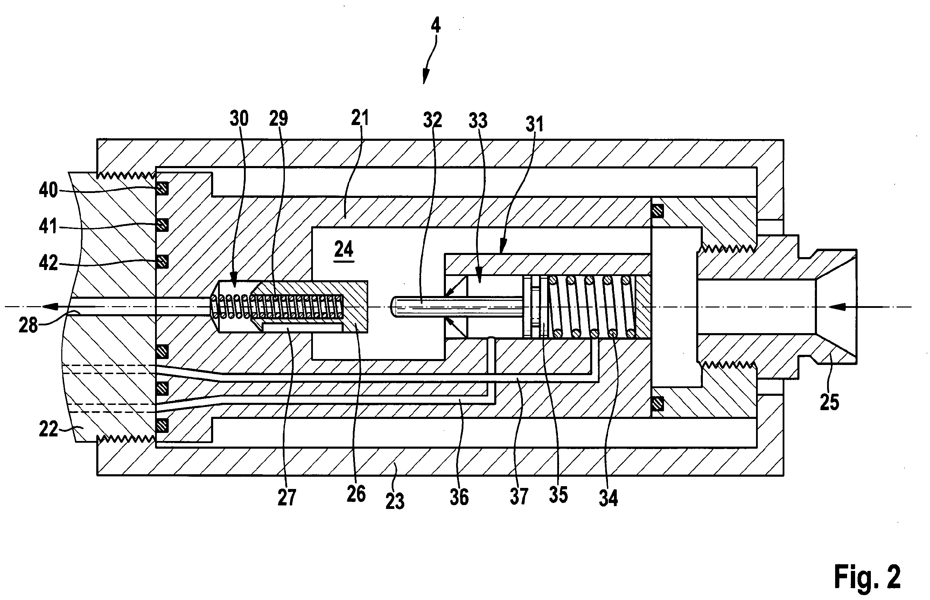

In **Fig. 2** ist das Brenngas-Mengenbegrenzungsventil 4 im Längsschnitt dargestellt. Das Mengenbegrenzungsventil 4 weist ein Gehäuse 21 auf sowie ein stirnseitig dem Injektoreingang zugewandtes Flanschstück 22, das über eine Überwurfmutter 23 mit dem Gehäuse 21 verbunden ist.

Im Gehäuse 21 ist ein Gasraum 24 gebildet, in den über ein Anschlussstück 25 auf der dem Flanschstück 22 axial gegenüberliegenden Seite Gas vom Hochdruck-Gasspeicher wie mit dem Pfeil angedeutet einströmt. Im Gasraum 24 kann sich ein kolbenförmiger Ventilkörper 26 axial bewegen, in dessen Wandung ein axial verlaufender Überströmkanal 27 eingebracht ist, über den das Gas aus dem Gasraum 24 zu einem Abströmkanal 28 im Flanschstück 22 gelangt, aus dem das Gas wie mit dem Pfeil angedeutet aus dem Brenngas-Mengenbegrenzungsventil 4 abgeleitet und in Richtung der Injektoreinheit weitergeführt wird.

Der Ventilkörper 26 wird von einem Federelement 29 in seine Öffnungsstellung kraftbeaufschlagt. Der Ventilkörper 26 ist in einem Aufnahmeraum 30 aufgenommen und kann im Aufnahmeraum 30 axial verstellt werden. Durch die Kraft des Federelementes 29 wird der Ventilkörper 26 in seiner Öffnungsposition gehalten, in der der Ventilkörper 26 axial teilweise in den Gasraum 24 einragt und Gas aus dem Gasraum 24 über den Überströmkanal 27 zu dem Abströmkanal 28 gelangt. Wird der Ventilkörper 26 vollständig oder weitgehend vollständig in den Aufnahmeraum 30 eingeschoben, liegt der Überströmkanal 27 außerhalb der Strömungsverbindung mit dem Gasraum 24, so dass die Strömungsverbindung unterbrochen ist; der Ventilkörper befindet sich damit in einer Schließposition, in der der Strömungsfluss durch das Mengenbegrenzungsventil 4 unterbrochen ist.

Der im Gasraum 24 herrschende Druck des eingeleiteten Brenngases wirkt auf die zugewandte Stirnseite des Ventilskörpers 26 und beaufschlagt diesen gegen die Kraft des Federelementes 29 in die Schließposition. Zugleich herrscht im Aufnahmeraum 30, in welchem sich der Ventilkörper 26 bewegen kann, ebenfalls ein Gasdruck, der den Ventilkörper 26 in die geöffnete Position kraftbeaufschlagt. Sofern der Gasdruck an beiden Stirnseiten des Ventilkörpers 26 zumindest annähernd gleich hoch ist, wird der Ventilkörper 26 durch die Kraft des auf ihn wirkenden Federelementes 29 in der Öffnungsposition gehalten. Sinkt jedoch der Gasdruck auf der dem Gasraum 24 abgewandten Seite ab, so wird der Ventilkörper 26 durch den Druck im Gasraum 24 in die Schließposition verstellt.

In das Gehäuse 21 des Mengenbegrenzungsventils 4 ist ein Steuerventil 31 integriert, dessen Stellelement 32 als Stellkolben ausgebildet ist, der koaxial sowie axial versetzt zu dem Ventilkörper 26 angeordnet ist. Der Stellkolben ist in einem abgeschlossenen Kolbenaufnahmeraum 33 axial verstellbar aufgenommen und von einem Federelement 34 in Richtung einer Funktionsposition kraftbeaufschlagt, in der der Stellkolben 32 den Ventilkörper 26 axial in die Schließposition versetzt. Der Stellkolben 32 ist mit einem Kopf 35 verbunden, der den Kolbenaufnahmeraum 33 in zwei Kammern unterteilt, wobei das Federelement 34 auf der dem Stellkolben 32 gegenüberliegenden Seite an dem Kopf 35 angreift.

Der Kolbenaufnahmeraum 33 ist diesseits und jenseits des Kopfes 35 über Steuerkanäle 36 und 37 mit Steuerleitungen 38 und 39 (Fig. 1) verbunden, die unmittelbar stromauf und stromab der Drossel 17 in der Rückfluss-Steuerleitung 15 verzweigen, welche zu dem Flüssigkraftstoff-Reservoir 7 führt. Die Steuerkanäle 36 und 37 sind in die Flanschplatte 22 bzw. das Gehäuse 21 eingebracht. Zwischen der Flanschplatte 22 und dem Gehäuse 21 befinden sich Dichtringe 40, 41 und 42, die die Steuerkanäle 36 und 37 radial abdichten.

Über den ersten Steuerkanal 36, der mit der Steuerleitung 38 verbunden ist, wird Flüssigkraftstoff als Steuerfluid unter verhältnismäßig hohem Druck in die Kammer des Kolbenaufnahmeraums 33 mit dem Stellkolben 32 geführt. Die gegenüberliegende Kammer des Kolbenaufnahmeraums 33, in der das Federelement 34 angeordnet ist, ist über den zweiten Steuerkanal 37 mit der Steuerleitung 39 stromab der Drossel 17 verbunden, an der ein niedrigerer Druck herrscht. Diese Druckdifferenz beaufschlagt das Stellelement mit dem Stellkolben und dem Kopf gegen die Kraft des Federelementes 34 in die zurückgezogene Außerfunktionsposition. Fällt die Druckdifferenz unter einen Schwellenwert, so sinkt die resultierende Kraft des hydraulischen Differenzdrucks auf den Kopf 35 unter die Federkraft des Federelementes 34 ab, und der Stellkolben 32 wird von der Außerfunktions- in die Funktionsposition axial verstellt wird, in welcher das stirnseitige Ende des Stellkolbens gegen den Ventilkörper 26 drückt und den Ventilkörper 26 in dessen Schließposition versetzt.

Während des Kraftstoffeinspritzbetriebs öffnet und schließt das Pilotventil 16 in der Taktung der Einspritzung. Hierbei entsteht ein Mitteldruck in der Rückfluss-Steuerleitung 15 stromab des Pilotventils 16, der über die Steuerleitung 38 und den Steuerkanal 36 in die Kammer des Kolbenaufnahmeraums 33 mit dem Stellkolben 32 geführt wird. Der Mitteldruck übersteigt im regulären Betrieb den für die Aufrechterhaltung der Außerfunktionsposition relevanten Schwellenwert, so dass das Stellelement des Steuerventils 31 in der Außerfunktionsposition gehalten wird.

Sinkt dagegen beispielsweise auf Grund einer Störung der Mitteldruck unmittelbar stromauf der Drossel 17 unter den Schwellenwert, was beispielsweise bei permanenter Schließung des Pilotventils 16 der Fall ist, so sinkt der Druck entsprechend in der Kammer des Kolbenaufnahmeraums 33 mit dem Stellkolben ab, so dass das Federelement 34 den Stellkolben in die Funktionsposition drückt und dieser den Ventilkörper 26 schließt.

Wenn das Pilotventil 20, das der Brenngas-Injektoreinheit 9 zugeordnet ist, störungsbedingt offen bleibt und zugleich das der Flüssigkraftstoff-Injektoreinheit 8 zugeordnete Pilotventil 16 störungsbedingt geschlossen ist, wird der Ventilkörper 26 des Mengenbegrenzungsventils 4 ebenfalls in die Schließposition verstellt, während das Steuerventil 31 in seiner Außerfunktionsstellung verharrt.

Wenn das der Brenngas-Injektoreinheit 9 zugeordnete Pilotventil 20 offen bleibt, schließt vorteilhafterweise das Flüssigkraftstoff-Mengenbegrenzungsventil 11, so dass anschließend das Mengenbegrenzungsventil 4 schließt.

## Patentansprüche

1. Mengenbegrenzungsventil für ein Dual-Fuel-Kraftstoffeinspritzsystem (1), mit einem zwischen einer Schließ- und einer Öffnungsposition verstellbaren Ventilkörper (26), wobei in Öffnungsposition ein Strömungskanal (27) für ein Förderfluid im Mengenbegrenzungsventil (4) freigegeben und in Schließposition der Strömungskanal (27) versperrt ist, wobei die Stellbewegung des Ventilkörpers (26) vom Förderfluiddruck abhängt,
**dadurch gekennzeichnet, dass** in das Gehäuse (21) des Mengenbegrenzungsventils (4) ein Steuerventil (31) integriert ist, über das der Ventilkörper (26) unabhängig vom Druck des Förderfluids von der Öffnungs- in die Schließposition verstellbar ist.

2. Mengenbegrenzungsventil nach Anspruch 1,
**dadurch gekennzeichnet, dass** ein den Ventilkörper (26) beaufschlagendes Stellelement (32) des Steuerventils (31) über ein Steuerfluid verstellbar ist.

3. Mengenbegrenzungsventil nach Anspruch 2,
**dadurch gekennzeichnet, dass** das Stellelement (32) des Steuerventils (31) als Stellkolben ausgebildet ist, wobei ein Kolbenaufnahmeraum (33), in welchem der Stellkolben aufgenommen ist, von dem Steuerfluid beaufschlagt ist.

4. Mengenbegrenzungsventil nach Anspruch 3,
**dadurch gekennzeichnet, dass** die gegenüberliegenden Stirnseiten des Stellelements (32) bzw. eines mit dem Stellelement (32) verbundenen Bauteils von dem Steuerfluid mit unterschiedlich hohem Druck beaufschlagt sind.

5. Mengenbegrenzungsventil nach einem der Ansprüche 2 bis 4,
**dadurch gekennzeichnet, dass** in eine Steuerleitung (15) des Steuerfluids eine Drossel (17) integriert ist.

6. Mengenbegrenzungsventil nach Anspruch 4 und 5,
**dadurch gekennzeichnet, dass** die gegenüberliegenden Stirnseiten des Stellelements (32) bzw. des mit dem Stellelement (32) verbundenen Bauteils von dem Steuerfluid stromauf und stromab der Drossel (17) beaufschlagt sind.

7. Mengenbegrenzungsventil nach einem der Ansprüche 2 bis 6,
**dadurch gekennzeichnet, dass** der Ventilkörper (26) und das Stellelement (32) des Steuerventils (31) koaxial angeordnet sind.

8. Mengenbegrenzungsventil nach einem der Ansprüche 2 bis 7,
**dadurch gekennzeichnet, dass** das Stellelement (32) des Steuerventils (31) von einem Federelement (34) in seine Außerfunktionsposition kraftbeaufschlagt ist.

9. Mengenbegrenzungsventil nach einem der Ansprüche 2 bis 8,
**dadurch gekennzeichnet, dass** das Steuerfluid ein Flüssigkraftstoff ist.

10. Mengenbegrenzungsventil nach einem der Ansprüche 1 bis 9,
**dadurch gekennzeichnet, dass** der Ventilkörper (26) von einem Federelement (29) in seine Öffnungsposition kraftbeaufschlagt ist.

11. Mengenbegrenzungsventil nach einem der Ansprüche 1 bis 10,
**dadurch gekennzeichnet, dass** das Förderfluid ein Brenngas ist.

12. Dual-Fuel-Kraftstoffeinspritzsystem mit einem Mengenbegrenzungsventil nach einem der Ansprüche 1 bis 11, mit einer Brenngas-Injektoreinheit (9) und einer Flüssigkraftstoff-Injektoreinheit (8).

13. Dual-Fuel-Kraftstoffeinspritzsystem nach Anspruch 12,
**dadurch gekennzeichnet, dass** das Mengenbegrenzungsventil (4) der Brenngas-Injektoreinheit (9) zugeordnet ist.

14. Dual-Fuel-Kraftstoffeinspritzsystem nach Anspruch 13,
**dadurch gekennzeichnet, dass** in einer Steuerleitung (15), die mit der Flüssigkraftstoff-Injektoreinheit (8) verbunden ist, ein verstellbares Pilotventil (16) angeordnet ist und stromab des Pilotventils (16) dem Mengenbegrenzungsventil (4) Steuerfluid zuführbar ist.

15. Verfahren zum Betrieb eines Dual-Fuel-Kraftstoffeinspritzsystem nach Anspruch 13 oder 14, bei dem der Flüssigkraftstoff als Steuerfluid genutzt wird und das Steuerventil (31) über den Druck des Steuerfluids verstellt wird.

## Claims

1. Flow limiting valve for a dual-fuel injection system (1), having a valve body (26) which can be adjusted between a closed position and an open position, a flow duct (27) for a fluid to be conveyed being opened in the flow limiting valve (4) in the open position, and the flow duct (27) being shut off in the closed position, the actuating movement of the valve body (26) being dependent on the pressure of the fluid to be conveyed, **characterized in that** a control valve (31) is integrated into the housing (21) of the flow limiting valve (4), via which control valve (31) the valve body (26) can be adjusted from the open position into the closed position independently of the pressure of the fluid to be conveyed.

2. Flow limiting valve according to claim 1, **characterized in that** an actuating element (32) of the control valve (31), which actuating element (32) loads the valve body (26), can be adjusted via a control fluid.

3. Flow limiting valve according to claim 2, **characterized in that** the actuating element (32) of the control valve (31) is configured as an actuating piston, a piston receiving space (33), in which the actuating piston is received, being loaded by the control fluid.

4. Flow limiting valve according to claim 3, **characterized in that** the opposite end sides of the actuating element (32) or of a component which is connected to the actuating element (32) are loaded by the control fluid at a pressure of different magnitude.

5. Flow limiting valve according to one of claims 2 to 4, **characterized in that** a throttle (17) is integrated into a control line (15) of the control fluid.

6. Flow limiting valve according to claims 4 and 5, **characterized in that** the opposite end sides of the actuating element (32) or of the component which is connected to the actuating element (32) are loaded by the control fluid upstream and downstream of the throttle (17).

7. Flow limiting valve according to one of claims 2 to 6, **characterized in that** the valve body (26) and the actuating element (32) of the control valve (31) are arranged coaxially.

8. Flow limiting valve according to one of claims 2 to 7, **characterized in that** the actuating element (32) of the control valve (31) is loaded with force into its out-of-operation position by a spring element (34).

9. Flow limiting valve according to one of claims 2 to 8, **characterized in that** the control fluid is a liquid fuel.

10. Flow limiting valve according to one of claims 1 to 9, **characterized in that** the valve body (26) is loaded with force into its open position by a spring element (29).

11. Flow limiting valve according to one of claims 1 to 10, **characterized in that** the fluid to be conveyed is a fuel gas.

12. Dual-fuel injection system having a flow limiting valve according to one of Claims 1 to 11, having a fuel gas injector unit (9) and a liquid fuel injector unit (8).

13. Dual-fuel injection system according to claim 12, **characterized in that** the flow limiting valve (4) is assigned to the fuel gas injector unit (9).

14. Dual-fuel injection system according to claim 13, **characterized in that** an adjustable pilot valve (16) is arranged in a control line (15) which is connected to the liquid fuel injector unit (8), and control fluid can be fed to the flow limiting valve (4) downstream of the pilot valve (16).

15. Method for operating a dual-fuel injection system according to claim 13 or 14, in which method the liquid fuel is used as a control fluid, and the control valve (31) is adjusted via the pressure of the control fluid.

## Revendications

1. Soupape de limitation de débit pour un système d'injection de carburant dual fuel (1) comprenant un corps de soupape (26) déplaçable entre une position de fermeture et une position d'ouverture, un canal d'écoulement (27) pour un fluide de refoulement étant ouvert dans la soupape de limitation de débit (4) dans la position d'ouverture et le canal d'écoulement (27) étant bloqué dans la position de fermeture, le mouvement de réglage du corps de soupape (26) dépendant de la pression du fluide de refoulement,
**caractérisée en ce qu'**une soupape de commande (31) est intégrée dans le boîtier (21) de la soupape de limitation de débit (4), par le biais de laquelle le corps de soupape (26) peut être déplacé de la position d'ouverture dans la position de fermeture indépendamment de la pression du fluide de refoulement.

2. Soupape de limitation de débit selon la revendication 1,
**caractérisée en ce qu'**un élément de réglage (32) de la soupape de commande (31) sollicitant le corps de soupape (26) peut être déplacé par le biais d'un fluide de commande.

3. Soupape de limitation de débit selon la revendication 2,
**caractérisée en ce que** l'élément de réglage (32) de la soupape de commande (31) est réalisé sous forme de piston de réglage, un espace de réception de piston (33) dans lequel est reçu le piston de réglage étant sollicité par le fluide de commande.

4. Soupape de limitation de débit selon la revendication 3,
**caractérisée en ce que** les côtés frontaux opposés de l'élément de réglage (32) ou d'un composant connecté à l'élément de réglage (32) sont sollicités par le fluide de commande avec une pression différente.

5. Soupape de limitation de débit selon l'une quelconque des revendications 2 à 4,
**caractérisée en ce qu'**un étranglement (17) est intégré dans une conduite de commande (15) du fluide de commande.

6. Soupape de limitation de débit selon les revendications 4 à 5,
**caractérisée en ce que** les côtés frontaux opposés de l'élément de réglage (32) ou du composant connecté à l'élément de réglage (32) sont sollicités par le fluide de commande en amont et en aval de l'étranglement (17).

7. Soupape de limitation de débit selon l'une quelconque des revendications 2 à 6,
**caractérisée en ce que** le corps de soupape (26) et l'élément de réglage (32) de la soupape de commande (31) sont disposés coaxialement.

8. Soupape de limitation de débit selon l'une quelconque des revendications 2 à 7,
**caractérisée en ce que** l'élément de réglage (32) de la soupape de commande (31) est sollicité par force par un élément de ressort (34) dans sa position de non-fonctionnement.

9. Soupape de limitation de débit selon l'une quelconque des revendications 2 à 8,
**caractérisée en ce que** le fluide de commande est un carburant liquide.

10. Soupape de limitation de débit selon l'une quelconque des revendications 1 à 9,
**caractérisée en ce que** le corps de soupape (26) est sollicité par force par un élément de ressort (29) dans sa position d'ouverture.

11. Soupape de limitation de débit selon l'une quelconque des revendications 1 à 10,
**caractérisée en ce que** le fluide de refoulement est un gaz combustible.

12. Système d'injection de carburant dual fuel comprenant une soupape de limitation de débit selon l'une quelconque des revendications 1 à 11, avec une unité d'injecteur de gaz combustible (9) et une unité d'injecteur de carburant liquide (8).

13. Système d'injection de carburant dual fuel selon la revendication 12, **caractérisé en ce que** la soupape de limitation de débit (4) est associée à l'unité d'injection de gaz combustible (9).

14. Système d'injection de carburant dual fuel selon la revendication 13, **caractérisé en ce que** dans une conduite de commande (15) qui est connectée à l'unité d'injecteur de carburant liquide (8), est disposée une soupape pilote réglable (16), et en aval de la soupape pilote (16), du fluide de commande peut être acheminé à la soupape de limitation de débit (4).

15. Procédé pour faire fonctionner un système d'injection de carburant dual fuel selon la revendication 13 ou 14, dans lequel le carburant liquide est utilisé en tant que fluide de commande et la soupape de commande (31) est réglée par le biais de la pression du fluide de commande.
